# EUROPEAN PATENT SPECIFICATION

(11) **EP 2 323 284 B1**
(45) Date of publication and mention of the grant of the patent: **16.01.2013**
(21) Application number: 09802385.6
(22) Date of filing: 14.07.2009
(51) Int. Cl.: H04Q 11/04, H04Q 11/00

(54) **A METHOD FOR SYNCHRONIZING THE SWITCHING STATE OF THE INTERCROSS UNIT IN NETWORK ELEMENT**
VERFAHREN ZUR SYNCHRONISIERUNG DES UMSCHALTSTATUS DER KREUZUNGSEINHEIT BEI EINEM NETZWERKELEMENT
PROCÉDÉ POUR SYNCHRONISER L'ÉTAT DE COMMUTATION DE L'UNITÉ D'ENTRELACEMENT D'UN ÉLÉMENT DE RÉSEAU

(30) Priority: 30.07.2008 CN 200810142714
(43) Date of publication of application: 18.05.2011
(73) Proprietor: ZTE Corporation, Guangdong Province 518057 (CN)
(72) Inventor: YANG, Zhaoxia, Shenzhen Guangdong 518057 (CN)
(74) Representative: Anderson, Angela Mary
(86) International application number: PCT/CN2009/072755
(87) International publication number: WO 2010/012192

(56) References cited:
- EP-A1- 1 796 296
- CN-A- 1 622 516
- CN-A- 1 870 509
- CN-A- 101 188 455
- CN-A- 101 330 343
- JP-A- 2003 134 072
- US-A1- 2004 179 472
- "Types and characteristics of SDH network protection architectures; G.841 (10/98)", ITU-T STANDARD, INTERNATIONAL TELECOMMUNICATION UNION, GENEVA ; CH, no. G.841 (10/98), 1 October 1998 (1998-10-01), pages 1-141, XP017461052, [retrieved on 2001-08-15]

## Description

### Technical Field

The present invention relates to a method for synchronizing cross units in a network element in the field of optical communication and optical transmission, and in particular, to a method for synchronizing the switching states of cross units in a network element in the field of optical communication and optical transmission.

### Background Art

In the optical-transmission communication system of the prior art, the cross unit in each network element detects the conditions for exciting a switch such as an alarm received by the local board separately in the process of practically operating a device, therefore, the detections for an alarm of various boards may be not consistent when there is an instantaneous change of alarm, thus causing the switching states of various boards to be inconsistent, or leading to a problem that the switching state of a certain board is not consistent with those of other boards when operated again after reset.

A similar system is e.g. disclosed in EP 1 796 296 A1.

With the development of the transmission device, a mode of united cross of a plurality of cross units is adopted in a network element of the device in certain situations. The so-called mode of united cross means that the same service is averagely split to all cross units in the union, the cross units in the union implement the same time slot configuration to carry out cross operation, which requires that various cross units in the union must be consistent in the time slot configuration so as to ensure normality of the service.

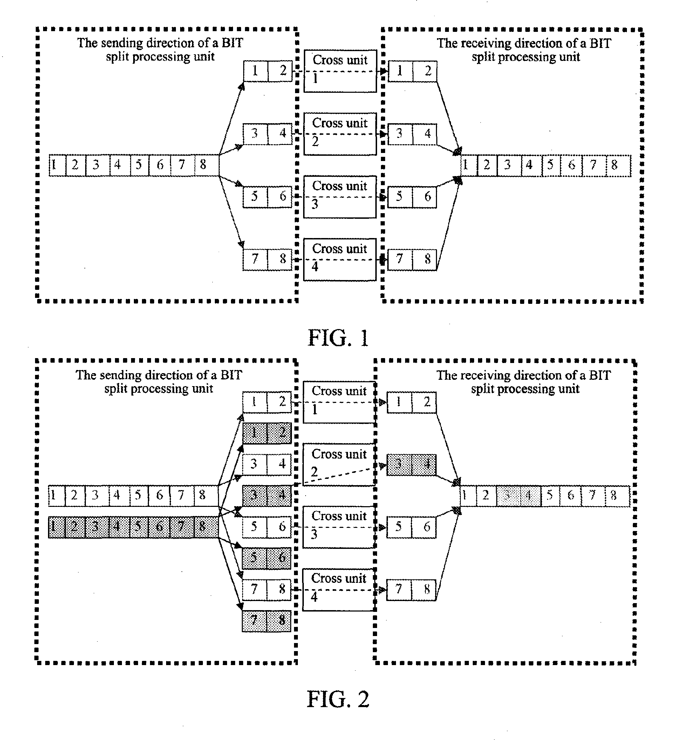

BIT split method is one of the united cross, whose basic principle is as shown in FIG. 1. In this method, as for the cross units in a union, if the switching state of any cross unit is not consistent with those of other cross units, the time slot configuration will be caused to be inconsistent, then the service will have a fault or be interrupted, as shown in FIG. 2, wherein, since the time slot configuration result of the second cross unit has a fault, the time slot configuration results of the third cross and the fourth cross unit within the same service time slot also have a fault, thus causing the service of the time slot to have a fault. Accordingly, the switching states and time slot configuration of various cross units in a union must be consistent. However, no technique is present in the prior art for keeping the switching states and time slot configuration of various cross units consistent.

Therefore, there is a need to improve and develop the prior art.

### Summary of the Invention

The purpose of the present invention is to provide a method for synchronizing the switching states of cross units in a network element, wherein the main cross unit sends the switching state and the time slot configuration data to the secondary cross units, and the secondary cross units update the switching state and the time slot configuration data to a local board switching state and time slot configuration data, thereby effectively ensuring that the switching states and time slot configuration results of all cross units in a union are consistent, thus avoiding the influences on the services.

The technical scheme of the present invention is as follows:
A method for synchronizing the switching states of cross units in a network element, comprising the following steps of:
   A, a main cross unit implementing a switching protocol to obtain and update a switching state and time slot configuration data, driving execution of system configuration, and sending the switching state and the time slot configuration data to secondary cross units; and
   B, the secondary cross units conducting a real-time detection for the switching state and the time slot configuration data, and then updating the switching state and the time slot configuration data to a local board switching state and time slot configuration data.

The method as above, wherein the method comprises the following steps prior to said step A:
A1, determining a cross unit as a main cross unit and other cross units as secondary cross units after the system is operated; and
A2, the main cross unit detecting outside conditions for triggering a switch.

The method as above, wherein said step A1 further comprises the following step of:
A12, returning to execute step A1 to reselect a main cross unit if the main cross unit is abnormal in position or in operation state.

The method as above, wherein said step B further comprises the following step of:
B1, each secondary cross unit detecting outside conditions for triggering a switch, and implementing a switching protocol according to the outside conditions for triggering a switch to obtain a switching state and time slot configuration data.

The method as above, wherein the method comprises the following step after said step B:
C, various secondary cross units driving execution of system configuration according to the switching state result and time slot configuration data result transmitted by the main cross unit.

The method as above, wherein the switching protocol is an automatic protection switching (APS) protocol.

The method as above, wherein the switching state and the time slot configuration data are provided for use when a local secondary cross unit changes from a secondary cross unit to a main cross unit.

The method as above, wherein the outside conditions for triggering a switch include:
alarm information of a multiplexing section and change information of K byte;
the switching protocol is implemented once any one of the two changes.

In the method for synchronizing the switching state of cross units in network element according to the invention, the main cross unit sends the switching state and the time slot configuration data to the secondary cross units, and the secondary cross units update the switching state and the time slot configuration data to a local board switching state and time slot configuration data, thereby effectively ensuring that the switching states and time slot configuration data of all cross units in a union are consistent, thus improving the stability of the system multiplexing section and channel switching and avoiding the influences on the services.

### Brief Description of Drawings

FIG. 1 illustrates the BIT split processing in the prior art;
FIG. 2 illustrates the service cross in a case where the time slots are not consistent in the prior art;
FIG. 3 is a flow chart of the synchronizing method according to the present invention;
FIG. 4 illustrates application of the synchronizing method according to the present invention.

### Preferred Embodiments of the Invention

Various preferred embodiments of the present invention will be described in further detail with reference to the drawings.

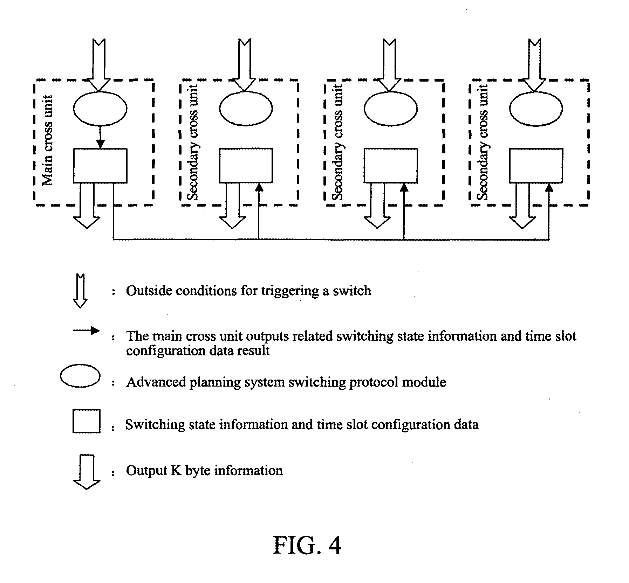

In the method for synchronizing the switching states of cross units in a network element according to the present invention, each cross unit includes a multiplexing section APS protocol processing module, the input conditions of which are outside conditions for triggering a switch, including multiplexing section alarm information and K byte information and the like. The APS protocol module performs APS protocol operation processing according to the outside conditions for triggering a switch, and finally judges to generate a switching state result and a time slot configuration data result. The switching state result includes: switching state information of a protocol processor and information of K byte to be sent, as shown in FIG. 4.

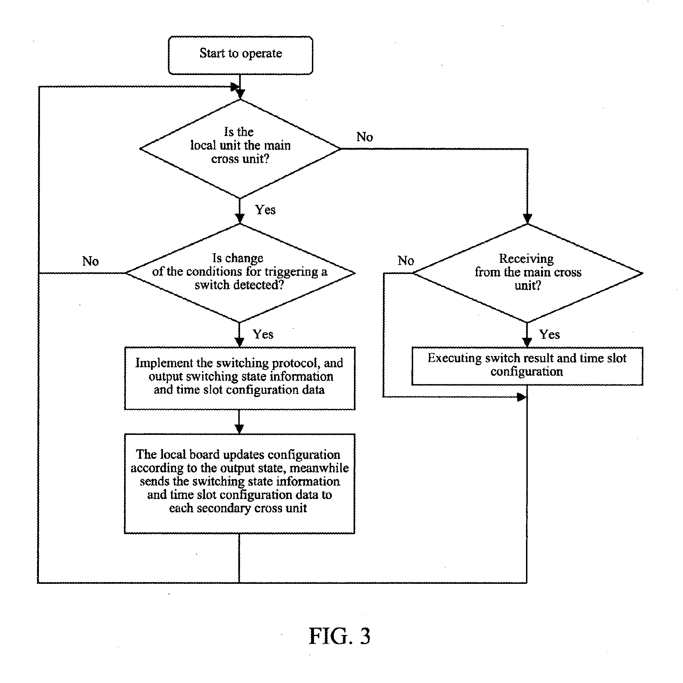

The core of the method for synchronizing the switching states of cross units in a network element according to the present invention is that a mode of main-secondary synchronization is used, a cross unit is selected as a main cross unit while other cross units are used as secondary cross units. The main cross unit detects the conditions for triggering a switch and implements the multiplexing section APS protocol and channel protection switching protocol, and sends the related switching state information and time slot configuration data result obtained after implementation to the secondary cross units in the network element, then the secondary cross units directly use the switching state information and time slot configuration data sent by the main cross unit, thereby ensuring that the switching states and time slot configuration data of various cross units are consistent. As shown in FIG. 3, the steps of the synchronizing method are specifically as follows:
A, selecting a main cross unit: a network element control board determining the cross unit with the minimum slot number as the main cross unit according to the in-position and operation state of the cross units, and sending the result of selecting the main cross unit to each cross unit.

As shown in FIG. 4, the leftmost cross unit is the main cross unit; a main cross unit will be reselected if the network element control board detects that the current main cross unit is abnormal in position or operation state;
B, the APS protocol module of the main cross unit detecting the multiplexing section alarm and change of K byte input from outside, and operating the protocol module to obtain a switching state result and a time slot configuration data result;
C, the main cross unit sending the witching state result and time slot configuration data result to each secondary cross unit at the mean time of the local board driving to implement configuration;
D, each secondary cross unit operating APS protocol module to detect the multiplexing section alarm and change of K byte input from outside, and operating the protocol module to obtain a switching state result and a time slot configuration data result meanwhile storing the switching state result and time slot configuration data result;

The switching state result and the time slot configuration data result of a secondary cross unit are only provided for use when the secondary cross unit changes from a secondary cross unit to a main cross unit;
E, each secondary cross unit driving execution of system configuration according to the switching state result and the time slot configuration data result received from the main cross unit.

In the method for synchronizing the switching state of cross units in network element according to the invention, the main cross unit sends the switching state and the time slot configuration data to the secondary cross units, and the secondary cross units update the switching state and the time slot configuration data to a local board switching state and time slot configuration data, thereby achieving synchronization of the switching states and time slot configuration results of various cross units, avoiding the occurrence of service interruption in the system caused by inconsistency of switching states and time slot configuration results of various cross units in a union when a BIT split mode is used, effectively ensuring that the switching states and time slot configuration data of all cross units in a union are consistent, thus improving the stability of the system multiplexing section and channel switching and avoiding the influences on the services.

It shall be understood that although the above specific examples are described in detail, they cannot be construed as a limit of the protection scope of the present invention. The protection scope of the present invention shall be limited by the attached claims.

### Industrial Applicability

In the method for synchronizing the switching state of cross units in network element according to the invention, the main cross unit sends the switching state and the time slot configuration data to the secondary cross units, and the secondary cross units update the switching state and the time slot configuration data to a local board switching state and time slot configuration data, thereby effectively ensuring that the switching states and time slot configuration data of all cross units in a union are consistent, thus improving the stability of the system multiplexing section and channel switching and avoiding the influences on the services.

## Claims

1. A method for synchronizing switching states of cross units in a network element, comprising the following steps of:
A, a main cross unit implementing a switching protocol to obtain and update a switching state and time slot configuration data, driving execution of system configuration, and sending the switching state and the time slot configuration data to secondary cross units; and
B, the secondary cross units conducting a real-time detection for the switching state and the time slot configuration data, and then updating the switching state and the time slot configuration data to a local board switching state and time slot configuration data.

2. The method according to claim 1, further comprising the following steps prior to said step A:
A1, determining a cross unit as a main cross unit and other cross units as secondary cross units after a system is operated; and
A2, the main cross unit detecting outside conditions for triggering a switch.

3. The method according to claim 2, wherein said step A1 further comprises the following step of:
A12, returning to execute step A1 to reselect a main cross unit if the main cross unit is abnormal in position or in operation state.

4. The method according to claim 1, wherein said step B further comprises the following step of:
B1, each secondary cross unit detecting outside conditions for triggering a switch, and implementing a switching protocol according to the outside conditions for triggering a switch to obtain a switching state and time slot configuration data.

5. The method according to claim 1, the method comprising the following step after said step B:
C, various secondary cross units driving execution of system configuration according to the switching state result and time slot configuration data result transmitted by the main cross unit.

6. The method according to claim 1, wherein the switching protocol is an automatic protection switching (APS) protocol.

7. The method according to claim 4, wherein the switching protocol is an automatic protection switching (APS) protocol.

8. The method according to claim 4, wherein the switching state and the time slot configuration data are provided for use when a local secondary cross unit changes from a secondary cross unit to a main cross unit.

9. The method according to claim 2, wherein the outside conditions for triggering a switch comprise:
alarm information of a multiplexing section and change information of K byte;
the switching protocol is implemented once any one of the two changes.

10. The method according to claim 4, wherein the outside conditions for triggering a switch comprise:
alarm information of a multiplexing section and change information of K byte;
the switching protocol is implemented once any one of the two changes.

## Patentansprüche

1. Ein Verfahren zum Synchronisieren von Schaltzuständen von Kreuzungseinheiten in einem Netzwerkelement, das die folgenden Schritte beinhaltet:
A, wobei eine Hauptkreuzungseinheit ein Schaltprotokoll implementiert, um einen Schaltzustand und Zeitfensterkonfigurationsdaten zu erhalten und zu aktualisieren, die Ausführung einer Systemkonfiguration antreibt und den Schaltzustand und die Zeitfensterkonfigurationsdaten an sekundäre Kreuzungseinheiten sendet; und
B, wobei die sekundären Kreuzungseinheiten eine Echtzeiterkennung für den Schaltzustand und die Zeitfensterkonfigurationsdaten durchführen und dann den Schaltzustand und die Zeitfensterkonfigurationsdaten zu einem Schaltzustand und Zeitfensterkonfigurationsdaten einer lokalen Baugruppe aktualisieren.

2. Verfahren gemäß Anspruch 1, das ferner vor dem Schritt A die folgenden Schritte beinhaltet:
A1, Bestimmen einer Kreuzungseinheit als eine Hauptkreuzungseinheit und anderer Kreuzungseinheiten als sekundäre Kreuzungseinheiten, nachdem ein System betrieben worden ist; und
A2, wobei die Hauptkreuzungseinheit Außenbedingungen zum Auslösen eines Schalters erkennt.

3. Verfahren gemäß Anspruch 2, wobei der Schritt A1 ferner den folgenden Schritt beinhaltet:
A12, Zurückkehren zum Ausführen von Schritt A1, um erneut eine Hauptkreuzungseinheit auszuwählen, wenn die Hauptkreuzungseinheit hinsichtlich Position oder Betriebszustand abnormal ist.

4. Verfahren gemäß Anspruch 1, wobei der Schritt B ferner den folgenden Schritt beinhaltet:
B1, wobei jede sekundäre Kreuzungseinheit Außenbedingungen zum Auslösen eines Schalters erkennt und ein Schaltprotokoll gemäß den Außenbedingungen zum Auslösen eines Schalters implementiert, um einen Schaltzustand und Zeitfensterkonfigurationsdaten zu erhalten.

5. Verfahren gemäß Anspruch 1, wobei das Verfahren ferner nach dem Schritt B den folgenden Schritt beinhaltet:
C, wobei verschiedene sekundäre Kreuzungseinheiten die Ausführung der Systemkonfiguration gemäß dem Schaltzustandsresultat und dem Zeitfensterkonfigurationsdatenresultat, die von der Hauptkreuzungseinheit übertragen werden, antreiben.

6. Verfahren gemäß Anspruch 1, wobei das Schaltprotokoll ein APS-Protokoll (APS = automatische Schutzschaltung) ist.

7. Verfahren gemäß Anspruch 4, wobei das Schaltprotokoll ein APS-Protokoll (APS = automatische Schutzschaltung) ist.

8. Verfahren gemäß Anspruch 4, wobei der Schaltzustand und die Zeitfensterkonfigurationsdaten zur Verwendung bereitgestellt werden, wenn sich eine lokale sekundäre Kreuzungseinheit von einer sekundären Kreuzungseinheit zu einer Hauptkreuzeinheit ändert.

9. Verfahren gemäß Anspruch 2, wobei die Außenbedingungen zum Auslösen eines Schalters Folgendes beinhalten:
Alarminformationen eines Multiplexierungsabschnitts und KByte-Änderungsinformationen;
das Schaltprotokoll wird implementiert, sobald sich ein Beliebiges der beiden ändert.

10. Verfahren gemäß Anspruch 4, wobei die Außenbedingungen zum Auslösen eines Schalters Folgendes beinhalten:
Alarminformationen eines Multiplexierungsabschnitts und KByte-Änderungsinformationen;
das Schaltprotokoll wird implementiert, sobald sich ein Beliebiges der beiden ändert.

## Revendications

1. Un procédé pour synchroniser des états de commutation d'unités de croisement dans un élément de réseau, comprenant les étapes suivantes de :
A, une unité de croisement principale mettant en oeuvre un protocole de commutation pour obtenir et mettre à jour un état de commutation et des données de configuration de créneaux de temps, effectuant l'exécution d'une configuration de système et envoyant l'état de commutation et les données de configuration de créneaux de temps à des unités de croisement secondaires ; et
B, les unités de croisement secondaires conduisant une détection en temps réel pour l'état de commutation et les données de configuration de créneaux de temps, puis mettant à jour l'état de commutation et les données de configuration de créneaux de temps à un état de commutation de module local et des données de configuration de créneaux de temps.

2. Le procédé selon la revendication 1, comprenant en outre les étapes suivantes préalablement à ladite étape A :
A1, déterminer une unité de croisement comme unité de croisement principale et d'autres unités de croisement comme unités de croisement secondaires après qu'un système est actionné ; et
A2, l'unité de croisement principale détectant des conditions extérieures pour déclencher une commutation.

3. Le procédé selon la revendication 2, dans lequel ladite étape A1 comprend en outre l'étape suivante de :
A12, revenir à l'exécution de l'étape A1 pour sélectionner à nouveau une unité de croisement principale si l'unité de croisement principale est en position ou en état de fonctionnement anormal.

4. Le procédé selon la revendication 1, dans lequel ladite étape B comprend en outre l'étape suivante de :
B1, chaque unité de croisement secondaire détectant des conditions extérieures pour déclencher une commutation, et mettant en oeuvre un protocole de commutation selon les conditions extérieures pour déclencher une commutation afin d'obtenir un état de commutation et des données de configuration de créneaux de temps.

5. Le procédé selon la revendication 1, le procédé comprenant l'étape suivante après ladite étape B :
C, diverses unités de croisement secondaires effectuant l'exécution d'une configuration de système selon le résultat d'état de commutation et le résultat de données de configuration de créneaux de temps transmis par l'unité de croisement principale.

6. Le procédé selon la revendication 1, dans lequel le protocole de commutation est un protocole de commutation automatique sur liaison de réserve (APS).

7. Le procédé selon la revendication 4, dans lequel le protocole de commutation est un protocole de commutation automatique sur liaison de réserve (APS).

8. Le procédé selon la revendication 4, dans lequel l'état de commutation et les données de configuration de créneaux de temps sont prévus pour être utilisés lorsqu'une unité de croisement secondaire locale change d'une unité de croisement secondaire à une unité de croisement principale.

9. Le procédé selon la revendication 2, dans lequel les conditions extérieures pour déclencher une commutation comprennent :
des informations d'alarme d'une section de multiplexage et des informations de changement de kilo-octet ;
le protocole de commutation est mis en oeuvre dès qu'un ensemble d'informations quelconque parmi les deux change.

10. Le procédé selon la revendication 4, dans lequel les conditions extérieures pour déclencher une commutation comprennent :
des informations d'alarme d'une section de multiplexage et des informations de changement de kilo-octet ;
le protocole de commutation est mis en oeuvre dès qu'un ensemble d'informations quelconque parmi les deux change.
